# EUROPÄISCHE PATENTSCHRIFT

(11) **EP 2 965 859 B1**
(45) Veröffentlichungstag und Bekanntmachung des Hinweises auf die Patenterteilung: **14.03.2018**
(21) Anmeldenummer: 14176518.0
(22) Anmeldetag: 10.07.2014
(51) Int. Cl.: B23P 19/08, B25B 27/00, B25B 27/28, F16L 11/15, F16L 25/00

(54) **Verfahren und Vorrichtung zum Aufbringen eines Dichtungsringes auf ein Wellrohr**
Method and device for applying a seal ring on a corrugated tube
Procédé et dispositif d'application d'une bague d'étanchéité sur un tuyau ondulé

(43) Veröffentlichungstag der Anmeldung: 13.01.2016
(73) Patentinhaber: Lüers Maschinen- und Stahlbau GmbH, 49424 Lutten-Goldenstedt (DE)
(72) Erfinder: Lüers, Gregor, 49424 Lutten (DE)
(74) Vertreter: Meyer, Ludgerus

(56) Entgegenhaltungen:
- EP-B1- 2 422 922
- DE-A1- 19 840 892
- JP-A- S5 536 615
- US-A- 4 550 486
- DATABASE WPI Week 199325 Thomson Scientific, London, GB; AN 1993-203829 XP002728073, -& SU 1 742 024 A1 (SEVAST INSTR INST) 23. Juni 1992 (1992-06-23)
- DATABASE WPI Week 198301 Thomson Scientific, London, GB; AN 1983-A1936K XP002728074, -& SU 904 973 A1 (SEVAST INST CONS) 15. Februar 1982 (1982-02-15)
- DATABASE WPI Week 198517 Thomson Scientific, London, GB; AN 1985-104220 XP002728075, -& SU 1 119 817 A1 (SEVAST INSTR INST) 23. Oktober 1984 (1984-10-23)
- DATABASE WPI Week 198241 Thomson Scientific, London, GB; AN 1982-N5022E XP002728076, -& SU 885 661 A1 (SEVAST EQUIP CONS) 30. November 1981 (1981-11-30)

## Beschreibung

Die Erfindung betrifft ein Verfahren zum Aufbringen eines radial dehnbaren Dichtungsringes auf die Außenseite eines sowie eine entsprechende Vorrichtung. In der Kanalisationstechnik kommen häufig ein- oder doppelwandige Wellrohre zum Einsatz, deren Außenoberfläche eine gewellte Struktur aufweist, die aus Tälern und Höhen besteht.
Bei doppellagigen Wellrohren ist die Außenoberfläche gewellt, während das Innenrohr als Glattrohr ausgebildet ist, wobei die Täler des Wellrohres mit dem innenseitigen Glattrohr verbunden sind. Ein derartiges Rohr ist daher sehr steif und wird in der Regel als Rohrabschnitte hergestellt, die bei ihrem Einsatz über Muffenverbindungen miteinander verbunden werden. Zur Abdichtung zweier Rohrabschnitte gegeneinander wird in der Regel ein Dichtungsring verwendet, der in ein endseitiges Tal des Spitzendes eines Rohres eingelegt wird, wobei das Spitzende mit der Dichtung dann in das Muffenende eines zweiten Rohres eingesteckt wird.
Das Aufbringen eines Dichtungsringes auf ein Wellrohr gestaltet sich bei kleinen Durchmessern von unter 100 mm noch relativ einfach und kann per Hand durchgeführt werden. Bei größeren Durchmessern wird das Aufbringen eines Dichtungsringes jedoch schwierig, da der jeweilige Dichtungsring über wenigstens eine Höhe des Rohres gestülpt werden muss, bevor er in ein Tal eintreten kann. Derartige Dichtungsringe können aufgrund ihrer großen Querschnittsfläche nur mit großen Kräften gedehnt werden.
Als Alternative zu Dichtungsringen mit großem Querschnitt, die ein gesamtes Tal eines Wellrohrs ausfüllen, ist es auch bekannt, die Höhen eines Wellrohres mit einer oberseitigen kleinen Nut zu versehen, in die eine Dichtung mit relativ kleinem Querschnitt eingelegt werden kann. Ein solches Dichtungssystem ist z. B. aus der DE 198 40 892 A1 bekannt.
Allerdings ist hier hoher Wert auf Passgenauigkeit und Einhaltung von Toleranzen der Rohrdurchmesser zu legen, da es bei ungenügender Anpassung leicht dazu führen kann, das eine in die Nut eingelegte Dichtung sich beim Zusammenschieben zweier Rohre aus der Nut löst und damit die Dichtungseigenschaft verloren geht. Ferner können derartige Dichtungen nicht fabrikmäßig auf ein herzustellendes Wellrohr aufgezogen werden, da sich diese beim Transport leicht vom Wellrohr lösen können. Das Aufziehen einer solchen Dichtung auf ein Rohr im Baustellenbetrieb führt auch leicht zum Einbringen von Verschmutzungen in den Dichtungsgrund, so dass die Dichtungseigenschaft dann nicht mehr gewährleistet ist.
Zur Vermeidung des manuellen Aufbringens einer ringförmigen Dichtung auf ein Wellrohr ist aus der EP 2 422 922 B1 eine Vorrichtung bekannt geworden, bei der mehrere um eine Längsachse eines Halterahmens herum verteilte Greifeinrichtungen für die Dichtung verwendet werden, die Klauen aufweisen, die zwischen einer Klemmposition und einer Freigabeposition geschwenkt werden können. Die Greifvorrichtungen können zur Achse hin und von der Achse weg bewegt werden. Zum Aufziehen einer Dichtung auf ein Rohr wird die Dichtung mit Hilfe der Greifeinrichtungen soweit gedehnt, dass sie über das Rohr geführt werden kann. Dann werden die Greifeinrichtungen zur Achse hin bewegt, so dass die Dichtung in ein Tal des Wellrohres eintreten kann.
Die entsprechende Vorrichtung ist äußerst komplex aufgebaut und entsprechend kostenintensiv. Ferner kann es dabei leicht passieren, dass die Greifeinrichtungen beim Ausdehnen der Dichtung diese beschädigen, so dass die Dichteigenschaft verringert oder aufgehoben werden kann.

Aus der SU1742024, die dem nächstliegenden Stand der Technik entspricht, ist ein Verfahren zum Aufbringen eines radial dehnbaren Dichtungsringes auf die Außenseite eines Rohres, dessen Außenoberfläche mit wenigstens einer ringförmig umlaufenden Vertiefung zur Aufnahme des Dichtungsringes ausgebildet ist, wobei der Dichtungsring mittels einer drehbaren Halterung auf eine solche Drehzahl gebracht wird, dass sein Innenradius durch Fliehkraft und Dehnung größer als der maximale Außenradius des Rohres im Bereich der äußeren Oberfläche des Rohres wird, über die die Dichtung bis zur Vertiefung zu führen ist, der Dichtungsring im drehenden Zustand vom Ende des Rohres über den Bereich des maximalen Außenradius bis zu der Vertiefung geführt wird, und die Drehzahl des Dichtungsringes abgesenkt wird, bis der Dichtungsring durch Rückdehnung in die Vertiefung eintritt, bekannt.

Aus der SU 1742024 ist außerdem eine Vorrichtung zum Aufbringen eines radial dehnbaren Dichtungsringes auf die Außenseite eines Rohres, dessen Außenoberfläche mit wenigstens einer ringförmig umlaufenden Vertiefung zur Aufnahme des Dichtungsringes ausgebildet ist, wobei eine topfförmige drehbare Halterung vorgesehen ist, in die der Dichtungsring mit seiner Ringebene im Wesentlichen senkrecht zur Achse der Halterung einlegbar ist, die Halterung mit eingelegtem Dichtungsring in Axialrichtung vor die Stirnseite des Rohres gebracht werden kann, die Halterung mit einer solchen Drehzahl angetrieben werden kann, dass der Innenradius des eingelegten Dichtungsringes durch Fliehkraft und Dehnung größer als der maximale Außenradius des Rohres im Bereich der äußeren Oberfläche des Rohres wird, über die die Dichtung bis zur Vertiefung zu führen ist, Halterung und Rohr in Axialrichtung relativ zueinander derart bewegbar sind, so dass der Dichtungsring über die Vertiefung gebracht werden kann, und durch Reduzieren der Drehzahl der Halterung der Dichtungsring in die Vertiefung des Rohres eintreten kann, bekannt.

Der Erfindung liegt die Aufgabe zugrunde, ein einfaches Verfahren zum Aufbringen eines Dichtungsringes auf die Außenseite eines Wellrohres, anzugeben, das schnell ausgeführt werden kann, das eine Beschädigung der Dichtung vermeidet und das sehr flexibel einsetzbar ist.
Der Erfindung liegt ferner die Aufgabe zugrunde, eine Vorrichtung zum Aufbringen eines Dichtungsringes auf die Außenseite eines Wellrohres anzugeben, welche sehr einfach aufgebaut ist, in der Größe einfach zu skalieren ist und damit sowohl für kleine als auch für große Rohrdurchmesser verwendbar ist.

Diese Aufgabe wird durch die in den Ansprüchen 1 und 4 angegebene Erfindung gelöst. Vorteilhafte Weiterbildungen der Erfindung sind in Unteransprüchen angegeben.

Die Erfindung geht aus von einem Verfahren sowie von einer Vorrichtung zum Aufbringen eines radial dehnbaren Dichtungsringes auf die Außenseite eines Wellrohres, dessen Außenoberfläche mit ringförmig umlaufenden Vertiefungen ausgebildet ist, gemäß Anspruch 1 bzw. Anspruch 4. Der Dichtungsring wird mittels einer drehbaren Halterung auf eine solche Drehzahl gebracht, dass sein Innenradius durch Fliehkraft und Dehnung größer als der maximale Außenradius des Rohres im Bereich der äußeren Oberfläche des Rohres wird, über die die Dichtung bis zur Vertiefung zu führen ist. Der Dichtungsring wird im drehenden Zustand dann vom Ende des Rohres über den maximalen Außenradius bis zu der Vertiefung geführt und dann wird die Drehzahl des Dichtungsringes abgesenkt, bis der Dichtungsring durch Rückdehnung selbsttätig in die Vertiefung eintritt. Danach kann die Halterung von dem Rohr entfernt werden und ist zur Aufnahme eines neuen Dichtungsringes bereit, der auf ein weiteres Rohr aufgebracht werden soll. Der Dichtungsring wird nicht mechanisch gedehnt, insbesondere nicht punktförmig, sondern seine Dehnung beruht ausschließlich auf einer Dehnung aufgrund hoher Fliehkraft bei einer schnellen Drehung des Dichtungsrings um seine Achse. Bei ausreichend hoher Drehzahl, die insbesondere vom Durchmesser des Dichtungsrings, dessen Elastizitätseigenschaften und seines Material-Querschnitts abhängt, dehnt sich der Ring daher soweit, dass er im drehenden Zustand über die Höhen des Wellrohres geschoben werden kann. Der Dichtungsring wird zunächst in eine axial zum Dichtungsring drehbare topfförmige Halterung eingesetzt, bei der der Innenradius des zylindrischen Wandteils der Halterung größer als der Außenradius des Rohres im Bereich seines maximalen Außenradius plus der radialen Querschnittsausdehnung der Dichtung gewählt ist. Die Halterung wird mit eingesetztem Dichtungsring mit einer solchen Drehzahl angetrieben, dass der Dichtungsring sich durch Fliehkraft dehnt und sich mit seinem Außenumfang an die Innenseite des Wandteils der Halterung anlegt. Nach Überführung auf das Rohr und Absenken der Drehzahl der Halterung tritt der Dichtungsring unter Rückdehnung in die Vertiefung des Rohres ein und die Halterung wird dann von dem Rohr entfernt.
Die Drehung des Dichtungsringes mittels einer topfförmigen Halterung, an deren Innenseite die Außenoberfläche des Dichtungsringes bei hoher Drehzahl anliegt, führt zu einer stabilen Lage des Dichtungsringes im drehenden Zustand und erlaubt ein einfaches und genaues Einsetzen in die Vertiefung eines Wellrohres.
Das Rohr kann in Axialrichtung ruhend angeordnet sein, wobei die Halterung in Axialrichtung zum Rohr bewegbar ist. Alternativ kann die Halterung in Axialrichtung ruhend angeordnet sein und das Rohr wird in Axialrichtung zur Halterung bewegt. In beiden Fällen ist es zweckmäßig, das Rohr durch geeignete Klemmmittel an einer Drehung um seine Achse zu hindern.

Das Verfahren erlaubt es auch, gleichzeitig mehrere Dichtungsringe parallel nebeneinander auf ein Wellrohr aufzusetzen, indem eine Halterung verwendet wird, in der zwei oder mehr parallel nebeneinanderliegende Ringe auf eine hohe Drehzahl gebracht werden, so dass die Halterung mit mehreren drehenden Ringen zusammen über das Ende eines Rohres geschoben werden kann. Bei Absenken der Drehzahl werden dann alle Ringe gleichzeitig in die jeweiligen Täler des Wellrohres eingelegt. Die Halterung enthält einen zentralen Haltedorn, auf den der oder die Dichtungsringe im Ruhezustand der Halterung aufgelegt werden, bevor sie durch die Halterung gedreht werden. Die Verwendung des Dorns führt dazu, dass ein Dichtungsring bei anfänglich geringer Drehzahl zunächst durch den Dorn beschleunigt wird, bevor er sich bei höherer Drehzahl an die Innenoberfläche der Halterung anlegt.

Die Vorrichtung enthält eine topfförmige drehbare Halterung, in die der Dichtungsring mit seiner Ringebene im Wesentlichen senkrecht zur Achse der Halterung einlegbar ist. Die Halterung kann mit eingelegtem Dichtungsring in Axialrichtung vor die Stirnseite des Rohres gebracht werden. Die Halterung wird mit einer solchen Drehzahl angetrieben, dass der Innenradius des eingelegten Dichtungsringes durch Fliehkraft und Dehnung größer als der maximale Außenradius des Rohres im Bereich der äußeren Oberfläche des Rohres wird, über die die Dichtung bis zur Vertiefung zu führen ist. Halterung und Rohr sind in Axialrichtung relativ zueinander derart bewegbar, dass der Dichtungsring über die Vertiefung gebracht werden kann. Beim Reduzieren der Drehzahl der Halterung des Dichtungsringes kann der Dichtungsring in die Vertiefung des Rohres eintreten.
Der Antrieb der Halterung erfolgt vorzugsweise über eine Antriebswelle zur Kupplung mit einem Antriebsmotor. Alternativ kann die axial gelagerte Halterung auch mittels eines Zahn- oder Riemenantriebs gedreht werden. Die relative Bewegung zwischen Rohr und Halterung erfolgt vorzugsweise über einen Schlitten, auf dem entweder die Halterung oder das Rohr angeordnet ist.
Zur präziseren axialen Führung des Dichtungsringes in der Halterung weist diese an der Innenoberfläche ihres zylindrischen Wandteils eine Ausnehmung auf, in die der Dichtungsring bei Erreichen einer bestimmten Umfangsgeschwindigkeit bzw. Drehzahl eintritt. Die Form der Ausnehmung entspricht angenähert der äußeren Form des Dichtungsringes.
Zur parallelen Aufnahme von zwei oder mehr Dichtungsringen zur Übergabe der Dichtungen auf ein Rohr mit mehreren Vertiefungen kann die Innenoberfläche des Wandteils der Halterung eine entsprechende Zahl von Ausnehmungen aufweisen. Der Durchmesser des Haltedorns entspricht im Wesentlichen dem Innendurchmesser des Dichtungsringes im ruhenden Zustand. Die dadurch erreichte geringfügige Reibung zwischen Haltedorn und Innenseite des Dichtungsringes führt dazu, dass dieser recht schnell auf eine hohe Drehzahl gebracht werden kann und sich dann von dem Innendorn löst und in die äußere Vertiefung der Halterung eintritt.
Um sicherzustellen, dass die Abgabe eines bei hoher Geschwindigkeit drehenden Dichtungsringes genau an der Stelle eines Tals des Wellrohres erfolgt, weist die Halterung vorzugsweise eine axial gerichtete Vertiefung auf, in die die Stirnseite des Wellrohres eintreten kann und an einem definierten Anschlag stößt. Zur Vermeidung einer Reibung des Wellrohres in der Vertiefung der Halterung bei deren Drehung kann die Vertiefung ein Rollen- oder Walzenlager enthalten, welche die Zentrierung des Wellrohres gegenüber der drehenden Halterung ermöglichen.

Die Erfindung lässt sich leicht zu einer automatischen Bestückungseinrichtung ausbauen, bei der eine gesteuerte, automatische Zufuhr von Dichtungsringen zur Halterung und eine gesteuerte Übergabe auf ein Wellrohr erfolgt. Damit lässt sich sowohl das kraftaufwändige Aufbringen von Dichtungsringen per Hand vermeiden als auch mögliche Beschädigungen.

Die Erfindung wird nachstehend anhand eines Ausführungsbeispiels näher erläutert.
- Fig. 1: zeigt eine Halterung zum Aufbringen eines Dichtungsringes auf ein Wellrohr,
- Fig. 2: zeigt eine Detailansicht bei Verwendung von zwei Dichtungsringen und
- Fig. 3: zeigt eine schematische Ansicht zur horizontalen Einbringung eines Dichtungsrings in die Halterung und Wechsel der Orientierung der Halterung zur Übergabe auf ein Rohr

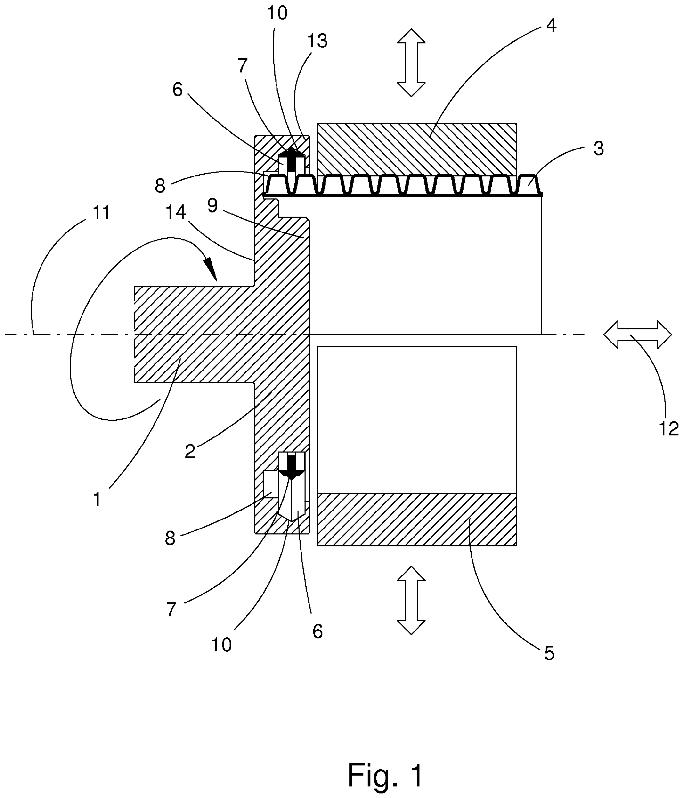

Zur besseren Erläuterung enthält Figur 1 einen unteren Teil unterhalb der Achse 11, der den ruhenden Zustand der Halterung 2 zeigt, während der obere Teil oberhalb der Achse 11 den Zustand der Halterung zeigt, in dem diese auf eine hohe Drehzahl gebracht ist.

Die dargestellte Halterung 2 ist im Wesentlichen topförmig mit einem Boden 14 und einem zylindrischen Wandteil 13 ausgebildet. Auf der Achse 11 der Halterung befindet sich eine Antriebswelle 1, die mittels einer geeigneten Kupplung mit einem motorischen Antrieb verbunden werden kann. Die Innenseite des Bodens 14 enthält einen axial gerichteten Haltedorn 9, der einen radialen Durchmesser hat, der etwa dem Innendurchmesser eines auf ein Rohr 3 aufzubringenden Dichtungsringes im Ruhezustand hat.

An der Innenseite des Wandteils 13 befindet sich eine Ausnehmung 6, deren innere Oberfläche 10 der Außenform eines Dichtungsringes 7 angepasst ist, der auf ein Wellrohr 3 aufzuziehen ist. Der Boden 14 enthält ferner zwischen dem Haltedorn 9 und dem Wandteil 13 eine axial gerichtete ringförmige Vertiefung 8, in die der stirnseitige Rand des Wellrohrs 3 eintreten kann.

Das Verfahren zum Aufbringen einer Dichtung auf ein Rohr gestaltet sich wie folgt:

Wie der untere Teil der Zeichnung zeigt, ist der Dichtungsring 7 zunächst entweder per Hand oder durch eine automatische Zuführungseinrichtung auf den Haltedorn 9 aufgesetzt, auf dem er entweder hängt oder mit leichter Reibkraft festgelegt ist. Nun wird die Halterung auf eine Drehzahl, abhängig vom Durchmesser des Dichtungsringes, von z. B. 2700 Umdrehungen pro Minute bei einem Durchmesser von 200 mm gebracht. Bei einem Rohr mit einem größeren Durchmesser kann die Drehzahl verringert werden, während sie bei einem kleineren Rohr zu erhöhen ist. Die erforderliche Drehzahl hängt auch von dem Material-Querschnitt des Dichtungsrings und den Elastizitätseigenschaften des Dichtungsrings ab.

Die Figur zeigt in der oberen Hälfte, dass der Dichtungsring 7 nun in die Vertiefung 6 eingetreten ist, wobei der Dichtungsring durch die erzeugte Fliehkraft sich soweit ausgedehnt hat, dass seine äußere Oberfläche der inneren Oberfläche 10 der Halterung folgt und an der Innenseite der Vertiefung 6 anliegt. Nun kann das Wellrohr 3 in Verschieberichtung 12 in die Halterung 2 eingeführt werden, wobei der stirnseitige Rand des Wellrohres 3 in die Vertiefung 8 eintritt. Zur Vermeidung einer Drehung des Wellrohres um seine Achse ist eine Rohrklammerung mit oberen und unteren Klemmbacken 4 und 5 vorgesehen.

Wenn nun die Drehzahl der Halterung 2 reduziert wird oder ganz gestoppt wird, verringert sich die Fliehkraft, so dass sich der Dichtungsring 7 zurückdehnt und damit in ein Tal des Wellrohres zwischen zwei Höhen eintreten kann. Sobald der Dichtungsring die Flanken des Wellrohres berührt, verringert sich eine Geschwindigkeit weiter und wird abrupt abgebremst, wobei er sich vollständig in das Tal des Wellrohres einlegt. Nun kann die Halterung von dem Wellrohr entfernt werden und ist bereit für das Aufbringen eines neuen Dichtungsringes auf ein weiteres Wellrohr.

Zur Relativbewegung zwischen Wellrohr und Halterung kann entweder die Halterung in Richtung auf das Wellrohr geschoben werden oder das Wellrohr kann in Richtung auf die Halterung bewegt werden. Der Antrieb der Halterung kann entweder an seiner Antriebswelle erfolgen oder die Halterung kann auch an ihrer Außenseite geeignet angetrieben werden, z. B. über ein Zahngetriebe.

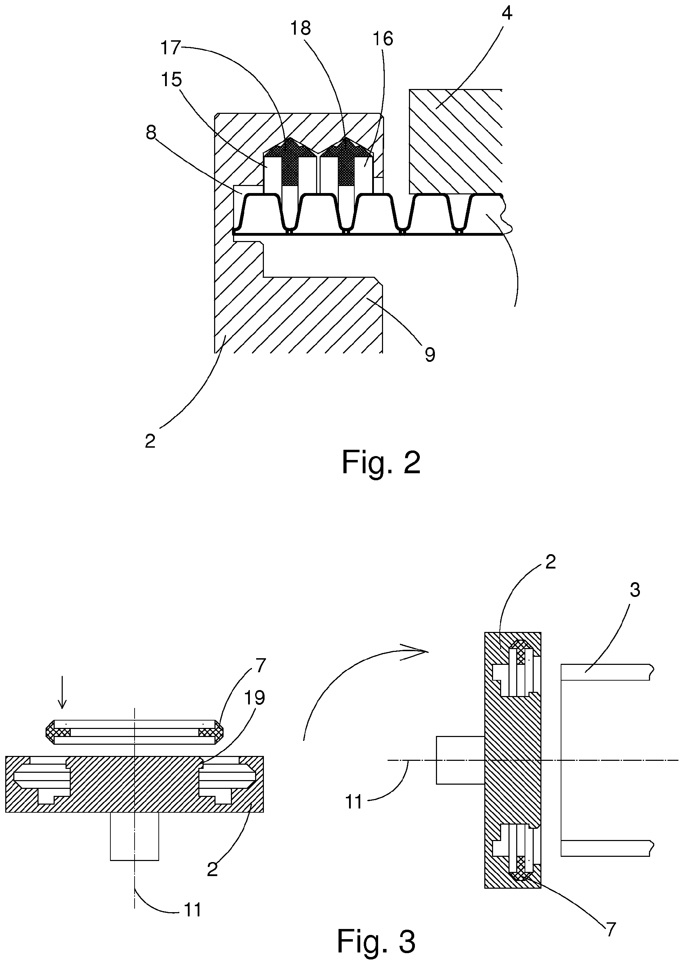

Wenn die axiale Länge des Wandteils 13 vergrößert wird und darin mehrere Ausnehmungen 15, 16 ausgebildet werden, wie in Fig. 2 dargestellt, können auch mehrere Dichtungen 17, 18 gleichzeitig auf ein Wellrohr parallel zueinander aufgebracht werden, um z. B. die Dichtungseigenschaften zu verbessern.

Mit Hilfe der Erfindung können nicht nur Dichtungsringe auf ein Wellrohr aufgebracht werden, die sich in die Täler des Wellrohres einlegen, sondern es können auch Dichtungen aufgebracht werden, die in Nuten auf einer Höhe eingesetzt werden.

Unter dem hier verwendeten Begriff Rohr ist nicht nur ein hohlzylindrisches Rohr zu verstehen, sondern es kann sich dabei auch um ein anderes zylindrischen Element handeln, das entweder aus Vollmaterial oder als hohles Element mit einer geschlossenen Stirnseite ausgebildet ist. Dafür ist lediglich die räumliche Anordnung des Haltedorns der Halterung z. B. durch eine axial nachgiebige Verschiebemöglichkeit zu verändern.

Der Einsatz der Erfindung ist daher nicht auf flexible dehnbare Gummi- oder Kunststoffringe beschränkt, sondern kann auch bei geschlitzten Metall- oder Kunststoffringen verwendet werden, die durch den Schlitz eine Dehnungsmöglichkeit haben. Derartige geschlitzte Ringe können z. B. Dichtungsringe sein, die in Nuten eines Kolbens einzusetzen sind, der anstelle eines Wellrohres in die erfinderische Halterung eingesetzt wird.

Das Rohr ist beim Aufbringen des Dichtungsrings in der Regel horizontal ausgerichtet. In einer ersten Ausführungsform ist auch die Halterung bzw. deren Achsrichtung horizontal gerichtet und der Verschiebeweg zwischen Halterung und Rohr verläuft horizontal.

In einer zweiten Ausführungsform, wie sie in Fig. 3 schematisch dargestellt ist, ist es aber auch möglich, die Halterung 2 beim Einbringen des Dichtungsrings 7 und während der Beschleunigung auf eine hohe Drehzahl mit ihrer Achse 11 vertikal oder im Winkel zur Horizontalen auszurichten. Damit wird es möglich, den Dichtungsring 7 in einer im Wesentlichen horizontalen Ebene oder schräg zur Vertikalen auf die Halterung 2 aufzubringen, so dass der Dichtungsring 7 leichter auf die Halterung 2 aufgelegt werden kann (insbesondere beim automatisierten Auflegen) und nicht vorzeitig von der Halterung wieder abfällt.

Die mit vertikal verlaufender Achse oder schräg zur Vertikalen beschleunigte Halterung wird nun (wie in Figur 3 dargestellt) im drehenden Zustand in eine solche Stellung geschwenkt, dass die Drehachse der Halterung 2 mit der Rohrachse gleichgerichtet verläuft. In dieser Lage kann die Dichtung dann auf das Rohr 3 übergeben werden.

Eine weitere Sicherung gegen Abfallen vom Haltedorn kann darin bestehen, den Haltedorn auf seiner Oberfläche mit einem vorderseitigen schmalen umlaufenden Steg 19 zu versehen, so dass ein aufgelegter Dichtungsring nicht von der Oberflächen des Haltedorns abrutschen kann.

### Bezugszeichen

- 1: Antriebswelle
- 2: Halterung
- 3: Rohr
- 4: obere Klemmbacke
- 5: untere Klemmbacke
- 6: Ausnehmung
- 7: Dichtungsring
- 8: Vertiefung
- 9: Haltedorn
- 10: Oberfläche
- 11: Achse
- 12: Verschieberichtung
- 13: Wandteil
- 14: Boden
- 15: Ausnehmung
- 16: Ausnehmung
- 17: Dichtring
- 18: Dichtring
- 19: Steg

## Patentansprüche

1. Verfahren zum Aufbringen eines radial dehnbaren Dichtungsringes (7) auf die Außenseite eines Wellrohres (3), dessen Außenoberfläche mit ringförmig umlaufenden Vertiefungen ausgebildet ist, wobei
- der Dichtungsring (7) mittels einer drehbaren topfförmigen Halterung (2) auf eine solche Drehzahl gebracht wird, dass sich der Dichtungsring (7) an die Innenoberfläche der Halterung (2) anlegt, wobei sein Innenradius durch Fliehkraft und Dehnung größer als der maximale Außenradius des Wellrohres (3) im Bereich der äußeren Oberfläche des Wellrohres (3) wird, über die die Dichtung bis zu einer der Vertiefungen zu führen ist, und wobei die drehbare Halterung einen zentralen Haltedorn (9) zur Aufnahme des ruhenden Dichtungsringes enthält und der Haltedorn einen Durchmesser aufweist, der im Wesentlichen dem Innendurchmesser des ruhenden Dichtungsringes entspricht, aufweist,
- der Dichtungsring (7) im drehenden Zustand der Halterung vom Ende des Rohres (3) über den Bereich des maximalen Außenradius bis zu einer Vertiefung geführt wird, in die der Dichtungsring einzusetzen ist, und dann
- die Drehzahl der Halterung abgesenkt wird, bis der Dichtungsring durch Rückdehnung in die Vertiefung eintritt.

2. Verfahren nach Anspruch 1, **dadurch gekennzeichnet, dass** in die Halterung (2) zwei parallel und im Abstand zweier Vertiefungen des Wellrohres angeordnete Dichtungsringe eingesetzt werden, die durch die Halterung gleichzeitig gedreht und auf die Oberfläche des Wellrohres aufgebracht werden.

3. Verfahren nach Anspruch 1 oder 2, **dadurch gekennzeichnet, dass** die Halterung (2) sich beim Einbringen des Dichtungsrings (7) in die Halterung (2) in einer Stellung mit vertikaler oder im Winkel zur Horizontalen verlaufender Achse befindet und nach Erreichen einer Drehzahl, bei der der Dichtungsring (7) sich an die Innenoberfläche der Halterung (2) anlegt, in eine Stellung geschwenkt wird, in der die Achse (11) der Halterung (2) mit der Achse des Rohrs (3) zusammenfällt.

4. Vorrichtung zum Aufbringen eines radial dehnbaren Dichtungsringes (7) auf die Außenseite eines Wellrohres (3), dessen Außenoberfläche mit ringförmig umlaufenden Vertiefungen ausgebildet ist, wobei
- eine topfförmige drehbare Halterung (2) mit einem zentralen Haltedorn (9), dessen Durchmesser im Wesentlichen dem Innendurchmesser eines ruhenden Dichtungsringes entspricht, der auf das Wellrohr aufzusetzen ist, versehen ist, wobei der Dichtungsring (7) mit seiner Ringebene im Wesentlichen senkrecht zur Achse (11) in die Halterung (2) einlegbar ist,
- die Halterung (2) mit eingelegtem Dichtungsring (7) in Axialrichtung vor die Stirnseite des Wellrohres (3) gebracht werden kann,
- die Halterung (2) mit einer solchen Drehzahl angetrieben werden kann, dass der Innenradius des eingelegten Dichtungsringes (7) durch Fliehkraft und Dehnung größer als der maximale Außenradius des Wellrohres (3) im Bereich der äußeren Oberfläche des Wellrohres (3) wird, über die die Dichtung bis zu einer Vertiefung zu führen ist, wobei sich der Dichtungsring (7) an die Innenoberfläche der Halterung (2) anlegt,
- Halterung (2) und Wellrohr (3) in Axialrichtung relativ zueinander derart bewegbar sind, so dass der Dichtungsring (7) über die Vertiefung gebracht werden kann,
- durch Reduzieren der Drehzahl der Halterung (2) der Dichtungsring (7) in eine Vertiefung des Rohres (3) eintreten kann, und
- die Innenoberfläche des Wandteils (13) der Halterung (2) wenigstens eine Ausnehmung (6) zur Aufnahme und Führung des Dichtungsringes (7) im angetriebenen Zustand der Halterung (2) enthält, wobei die Ausnehmung im Wesentlichen der äußeren Form des Dichtungsringes (7) folgt.

5. Vorrichtung nach Anspruch 4, **dadurch gekennzeichnet, dass** zwei oder mehr parallele Ausnehmungen (15, 16) an der Innenoberfläche des Wandteils (13) der Halterung (2) zur parallelen Aufnahme von zwei oder mehr Dichtungsringen (17, 18) und zur gleichzeitigen Übergabe der zwei oder mehr Dichtungsringen (17, 18) auf ein Wellrohr mit zwei oder mehr Vertiefungen vorgesehen sind.

6. Vorrichtung nach Anspruch 4, **dadurch gekennzeichnet, dass** das Rohr (3) bei der Abgabe des Dichtungsringes (7) auf das Rohr mittels einer Klammereinrichtung gehalten wird.

7. Vorrichtung nach Anspruch 4, **dadurch gekennzeichnet, dass** die Halterung (2) eine in Axialrichtung verlaufende ringförmige Vertiefung (8) zur Führung des stirnseitigen Endes des Wellrohres bei der Abgabe des Dichtungsringes (7) auf das Rohr (3) enthält.

8. Vorrichtung nach Anspruch 7, **dadurch gekennzeichnet, dass** die Vertiefung (8) eine Rollen- oder Walzenlagerung zur Lagerung des stirnseitigen Endes des Wellrohres enthält.

## Claims

1. Method for applying a radially expandable sealing ring (7) to the outside of a corrugated pipe (3), the outer surface of which pipe has annularly peripheral recesses, wherein
- a rotatable crucible-shaped holder (2) causes the sealing ring (7) to rotate at such a rotational speed that the sealing ring (7) is in contact with the inner surface of the holder (2), wherein, due to centrifugal force and expansion, the inner radius of said ring becomes greater than the maximum outer radius of the corrugated pipe (3) in the region of the outer surface of the corrugated pipe (3), over which outer surface the seal is to be guided as far as one of the recesses, and wherein the rotatable holder contains a central holding mandrel (9) for receiving the sealing ring that is at rest, and the holding mandrel has a diameter that substantially corresponds to the inner diameter of the sealing ring that is at rest,
- when the holder is rotating, the sealing ring (7) is guided from the end of the pipe (3), via the region having the maximum outer radius, as far as a recess in which the sealing ring is to be inserted, and then
- the rotational speed of the holder is reduced until the sealing ring enters the recess due to elastic relaxation.

2. Method according to claim 1, **characterised in that** two parallel sealing rings that are arranged at a distance from two recesses of the corrugated pipe are inserted into the holder (2), which rings are rotated simultaneously by the holder and are applied to the surface of the corrugated pipe.

3. Method according to either claim 1 or claim 2, **characterised in that**, when the sealing ring (7) is inserted into the holder (2), the holder (2) is in a position having a vertical axis or an axis extending at an angle to the horizontal and, after a rotational speed has been reached at which the sealing ring (7) is in contact with the inner surface of the holder (2), said holder is pivoted into a position in which the axis (11) of the holder (2) coincides with the axis of the pipe (3).

4. Device for applying a radially expandable sealing ring (7) to the outside of a corrugated pipe (3), the outer surface of which pipe has annularly peripheral recesses, wherein
- a crucible-shaped rotatable holder (2) comprising a central holding mandrel (9), the diameter of which mandrel substantially corresponds to the inner diameter of a sealing ring that is at rest and is to be placed on the corrugated pipe, is provided, wherein the sealing ring (7) can be inserted into the holder (2) such that the ring plane of said ring is substantially perpendicular to the axis (11),
- the holder (2) having the inserted sealing ring (7) can be placed in front of the end face of the corrugated pipe (3) in the axial direction,
- the holder (2) can be driven at such a rotational speed that, due to centrifugal force and expansion, the inner radius of the inserted sealing ring (7) becomes greater than the maximum outer radius of the corrugated pipe (3) in the region of the outer surface of the corrugated pipe (3), over which outer surface the seal is to be guided as far as a recess, wherein the sealing ring (7) is in contact with the inner surface of the holder (2),
- the holder (2) and the corrugated pipe (3) are movable relative to one another in the axial direction such that the sealing ring (7) can be moved over the recess,
- by reducing the rotational speed of the holder (2), the sealing ring (7) can enter a recess of the pipe (3), and
- the inner surface of the wall portion (13) of the holder (2) contains at least one depression (6) for receiving and guiding the sealing ring (7) when the holder (2) is being driven, wherein the depression substantially follows the outer shape of the sealing ring (7).

5. Device according to claim 4, **characterised in that** two or more parallel depressions (15, 16) are provided on the inner surface of the wall portion (13) of the holder (2) in order to receive two or more sealing rings (17, 18) in a parallel manner and to transfer the two or more sealing rings (17, 18) simultaneously to a corrugated pipe having two or more recesses.

6. Device according to claim 4, **characterised in that** the pipe (3) is held by means of a clamping apparatus when the sealing ring (7) is being placed onto the pipe.

7. Device according to claim 4, **characterised in that** the holder (2) contains an annular recess (8), extending in the axial direction, for guiding the end of the end face of the corrugated pipe when the sealing ring (7) is being placed onto the pipe (3).

8. Device according to claim 7, **characterised in that** the recess (8) contains a roller bearing or roll bearing for mounting the end of the end face of the corrugated pipe.

## Revendications

1. Procédé pour appliquer une bague d'étanchéité extensible radialement (7) sur le côté extérieur d'un tuyau ondulé (3) dont la surface extérieure est pourvue de creux annulaires sur tout le tour,
- la bague d'étanchéité (7) étant amenée, à l'aide d'un support rotatif en forme de godet (2), à une vitesse de rotation telle qu'elle s'applique sur la surface intérieure du support (2), son rayon intérieur, grâce à la force centrifuge et à l'extension, devenant plus grand que le rayon extérieur maximal du tuyau ondulé (3) dans la zone de la surface extérieure dudit tuyau ondulé (3) sur laquelle le joint d'étanchéité doit être guidé jusqu'à l'un des creux, et le support rotatif contenant un mandrin de support central (9) pour recevoir la bague d'étanchéité au repos, et ledit mandrin présentant un diamètre qui correspond dans l'ensemble au diamètre intérieur de la bague d'étanchéité au repos,
- la bague d'étanchéité (7), à l'état tournant du support, étant guidée à partir de l'extrémité du tuyau (3), en passant par la zone du rayon extérieur maximal, jusqu'à un creux dans lequel elle doit être introduite, et
- la vitesse de rotation du support étant ensuite réduite jusqu'à ce que la bague d'étanchéité entre, en se relâchant, dans le creux.

2. Procédé selon la revendication 1, **caractérisé en ce qu'**il est prévu, introduites dans le support (2), deux bagues d'étanchéité qui sont disposées parallèlement et suivant l'écartement de deux creux du tuyau ondulé, qui sont tournées simultanément par le support et qui sont appliquées sur la surface du tuyau ondulé.

3. Procédé selon la revendication 1 ou 2, **caractérisé en ce que** le support (2), lors de l'introduction de la bague d'étanchéité (7) dans ledit support (2), se trouve dans une position avec un axe vertical ou présentant un certain angle par rapport à l'horizontale, et après avoir atteint une vitesse de rotation en présence de laquelle la bague d'étanchéité (7) s'applique contre la surface intérieure du support (2), il pivote jusqu'à une position dans laquelle son axe (11) coïncide avec l'axe du tuyau (3).

4. Dispositif pour appliquer une bague d'étanchéité extensible radialement (7) sur le côté extérieur d'un tuyau ondulé (3) dont la surface extérieure est pourvue de creux annulaires sur tout le tour,
- un support rotatif en forme de godet (2) étant pourvu d'un mandrin de support central (9) dont le diamètre correspond dans l'ensemble au diamètre intérieur d'une bague d'étanchéité au repos qu'il s'agit de poser sur le tuyau ondulé, ladite bague d'étanchéité (7) étant apte à être placée dans le support (2) avec son plan de bague globalement perpendiculaire à l'axe (11),
- le support (2) pouvant être amené, avec la bague d'étanchéité (7) introduite, devant le côté frontal du tuyau ondulé (3), dans le sens axial,
- le support (2) pouvant être entraîné à une vitesse de rotation telle que le rayon intérieur de la bague d'étanchéité (7) mise en place devienne, grâce à la force centrifuge et à l'extension, plus grand que le rayon extérieur maximal du tuyau ondulé (3), dans la zone de la surface extérieure de celui-ci sur laquelle le joint d'étanchéité doit être guidé jusqu'à un creux, la bague d'étanchéité (7) s'appliquant sur la surface intérieure du support (2),
- le support (2) et le tuyau ondulé (3) étant mobiles l'un par rapport à l'autre dans le sens axial, de sorte que la bague d'étanchéité (7) peut être amenée sur le creux,
- grâce à une réduction de la vitesse de rotation du support (2), la bague d'étanchéité (7) pouvant entrer dans un creux du tuyau (3), et
- la surface intérieure de la partie de paroi (13) du support (2) contenant au moins un évidement (6) pour recevoir et guider la bague d'étanchéité (7), dans l'état entraîné du support (2), l'évidement suivant globalement la forme extérieure de la bague d'étanchéité (7).

5. Dispositif selon la revendication 4, **caractérisé en ce qu'**il est prévu deux évidements parallèles (15, 16), ou plus, sur la surface intérieure de la partie de paroi (13) du support (2), pour recevoir parallèlement deux bagues d'étanchéité (17, 18), ou plus, et les faire passer simultanément sur un tuyau ondulé pourvu de deux creux ou plus.

6. Dispositif selon la revendication 4, **caractérisé en ce que** le tuyau (3), lorsque la bague d'étanchéité (7) est déposée sur lui, est tenu à l'aide d'un dispositif à pince.

7. Dispositif selon la revendication 4, **caractérisé en ce que** le support (2) contient un creux annulaire (8) qui s'étend dans le sens axial, pour le guidage de l'extrémité frontale du tuyau ondulé lorsque la bague d'étanchéité (7) est déposée sur le tuyau (3).

8. Dispositif selon la revendication 7, **caractérisé en ce que** le creux (8) contient un palier à roulement ou à rouleaux pour l'appui de l'extrémité frontale du tuyau ondulé.
